# EUROPÄISCHE PATENTSCHRIFT

(11) **EP 4 134 270 B1**
(45) Veröffentlichungstag und Bekanntmachung des Hinweises auf die Patenterteilung: **08.04.2026**
(21) Anmeldenummer: 22184279.2
(22) Anmeldetag: 12.07.2022
(51) Int. Cl.: B60M 1/23

(54) **VERBINDUNGSANORDNUNG ZWISCHEN OBERLEITUNGEN EINER OBERLEITUNGSANLAGE**
CONNECTION ARRANGEMENT BETWEEN OVERHEAD LINES OF AN OVERHEAD SYSTEM
DISPOSITIF DE CONNEXION ENTRE LES LIGNES AÉRIENNES DE CONTACT D'UNE INSTALLATION DE LIGNE AÉRIENNE DE CONTACT

(30) Priorität: 06.08.2021 DE 102021208607
(43) Veröffentlichungstag der Anmeldung: 15.02.2023
(73) Patentinhaber: Siemens Mobility GmbH, 80997 München (DE)
(72) Erfinder: Hahn, Gunter, 91353 Hausen (DE); Terfloth, Sebastian, 91077 Dormitz (DE)
(74) Vertreter: Siemens Patent Attorneys

(56) Entgegenhaltungen:
- DE-A1- 102018 207 998
- DE-B1- 2 841 392

## Beschreibung

Die Erfindung betrifft eine Verbindungsanordnung zwischen Oberleitungen einer Oberleitungsanlage. Sowohl die DE 10 2018 207 998 A1 als auch die DE 28 41 392 zeigen derartige Verbindungsanordnungen.

Oberleitungen bzw. Fahrdrähte von zumindest teilweise elektrisch angetriebenen, schienengebundenen und nicht schienengebundenen Fahrzeugen, wie z.B. elektrischen Schienenfahrzeugen oder LKWs sind in Nachspannlängen mit einer Länge bis zu 2 km aufgeteilt. Der Übergang von einer Nachspannlänge auf die nächste findet überlappend mittels der jeweils zugehörigen Kettenwerke statt. Der entsprechende, endende Fahrdraht, aufgehängt am Tragseil, wird deshalb üblicherweise, ausgehend von seiner Sollhöhe über den Schienen bzw. der Fahrbahn zunächst nach oben und danach weiter außerhalb des Schienen/Gleis- oder Straßenbereichs gezogen, wo er an der Nachspanneinrichtung abgespannt wird. Das Tragseil, welches über Hänger, bzw. Hängerseile den Fahrdraht trägt, folgt diesem Verlauf ebenfalls. Der neue Fahrdraht wird analog dazu, jedoch von der entsprechenden Nachspanneinrichtung aus der anderen Richtung kommend, an den Schienen-/Gleisbereich bzw. an die Fahrbahn/Straße herangeführt und von oben her eingeführt, bis er die Fahrdrahtsollhöhe erreicht hat. Um einen unterbrechungsfreien Kontakt des Stromabnehmers des jeweiligen Fahrzeugs mit dem Fahrdraht zu gewährleisten, werden ein- und auslaufender Fahrdraht über eine gewisse Länge (z.B. eine Längsspannweite, üblicherweise ca. 30 - 80 m) parallel geführt.

Beim Heraus- und Hereinführen der Fahrdrähte und Tragseile eines Kettenwerks muss zwangsweise eines der Kettenwerke das andere kreuzen. Bei zweipoligen Kettenwerken kreuzen sich dementsprechend die durchgehenden Kettenwerke beider Pole.

Insbesondere bei windschiefer Bauweise und geringem Hängerabstand (z.B. von ca. 3m) kann nicht vermieden werden, dass sich Fahrdrähte oder Tragseile eines kreuzenden Kettenwerks mit einem Hänger, bzw. Hängerseil eines durchkreuzten Kettenwerks berühren, oder umgekehrt. Berührungsfreiheit ist jedoch unbedingt sicherzustellen, da durch unvermeidbare Längenänderungen der Leiter (z.B. Wärme, Verschleiß, etc.) sowie Lageänderungen der Leiter (z.B. Wind, Anhub bei Befahrung, etc.) die Leiter aneinander reiben und so nach kurzer Zeit mechanisch versagen würden. Zur Vermeidung einer Kollision der entsprechenden Leiter, beispielsweise Hängerseile, Fahrdrähte, Tragseile der kreuzenden Kettenwerke, werden in der Praxis die Fahrdrähte und Tragseile in unterschiedlichen Höhen verlegt, so dass beispielsweise der Fahrdraht des einen Kettenwerks über dem Fahrdraht des anderen Kettenwerks verläuft und analog dazu dasselbe für die entsprechenden Tragseile gilt, wobei gleichzeitig noch der Fahrdraht des einen Kettenwerks unter dem Tragseil des anderen Kettenwerks verläuft. Werden, wie z.B. bei Oberleitungen über Autobahnen, aus Sicherheitsbetrachtungen kürzere Hängerabstände notwendig, können durch eine Änderung der Hängereinbauorte, wie z.B. bei Oberleitungen über Gleise, keine Abhilfen zur Vermeidung einer Kollision getroffen werden.

Hänger, bzw. Hängerseile dienen der Aufhängung eines Fahrdrahts am zugehörigen, darüber verlaufenden Tragseil und bestehen in der Regel aus Kupfer- oder Bronzeseilen, sind also stromleitend. Hänger können auch zwei Tragseile oder auch zwei Fahrdrähte miteinander verbinden. Nur gelegentlich bestehen die Hänger aus Kunststoffseilen. Hänger können nahezu ausschließlich Zuglasten, bzw. Zugkräfte aufnehmen, was für die übliche Anwendung nicht nur ausreichend, sondern auch erforderlich ist, da die Flexibilität des Hängers eine gleichmäßige Befahrgüte der Oberleitung sicherstellt. Demzufolge verbinden Hänger, bzw. Hängerseile also üblicherweise zwei Punkte auf direktem, durchgehendem Weg. Ist dieser von einem kreuzenden Fahrdraht oder Tragseil belegt, kommt es zur Kollision der kreuzenden Leiter. Dies kann nur vermieden werden, wenn ein erforderliches Lichtraumprofil rund um den kreuzenden Leiter vorliegt, also der zur Kollisionsvermeidung notwendige "lichte Raum", im Folgenden auch Lichtraum genannt, vorhanden ist, der rund um den kreuzenden Leiter frei von Gegenständen, insbesondere weiteren Leitern ist, bzw. freigehalten wird.

Bisherige Bauweisen haben es in der Regel erlaubt, die Führung von Fahrdraht und Tragseil durch geschickte Höhenregulierung und Verschiebung der Hängerpositionen so zu gestalten, dass es zu keiner Kollision mit anderen Tragseilen, Fahrdrähten und Hängern, bzw. Hängerseilen kam. Vor allem bei Weichen mit sehr kleinen Öffnungswinkeln und kreuzender Kettenwerksbespannung werden allerdings Grenzen dieser Lösungsart erreicht. In diesen Fällen wurde dementsprechend bisher auf eine tangentiale Weichenbespannung ausgewichen, welche zu Bauverzögerungen und insbesondere zu deutlichen Mehrkosten führt. Gleiches gilt bei Überlappungen bei der windschiefen Bauweise an zweipoligen Kettenwerken.

Der Erfindung liegt die Aufgabe zugrunde, eine Verbindungsanordnung anzugeben, mit der eine Kollision von sich kreuzenden Leitern vermieden wird.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dazu wird eine Verbindungsanordnung zwischen wenigstens einer ersten und wenigstens einer zweiten Oberleitung einer Oberleitungsanlage, wobei sowohl die erste als auch die zweite Oberleitung entweder ein Tragseil oder ein Fahrdraht ist, bestehend aus wenigstens einem Verbindungsteil und wenigstens zwei Verbindungsvorrichtungen angegeben, wobei die erste Verbindungsvorrichtung das Verbindungsteil mit der ersten Oberleitung und die zweite Verbindungsvorrichtung das Verbindungsteil mit der zweiten Oberleitung verbindet, wobei das Verbindungsteil ein erstes und ein zweites Ende und wenigstens einen gekrümmten Bereich aufweist, wobei das erste und das zweite Ende des Verbindungsteils im Wesentlichen senkrecht übereinander angeordnet sind, wobei der wenigstens eine gekrümmte Bereich das erste und das zweite Ende des Verbindungsteils verbindet und wobei eine gedachte, direkte Verbindungslinie vom ersten Ende zum zweiten Ende und der wenigstens eine gekrümmte Bereich des Verbindungsteils einen Raum derart definiert, dass sich ein in diesem Raum befindlicher Gegenstand und das Verbindungsteil nicht berühren.

Die erfindungsgemäße Lösung hat den Vorteil, dass durch den gekrümmten Bereich, den das Verbindungsteil aufweist, ein Bereich, der sogenannte lichte Raum oder kurz Lichtraum, freigehalten wird, in dem sich sonst, ohne die erfindungsgemäße Krümmung, das Verbindungsteil und eine weitere Oberleitung, also ein weiterer, kreuzender Leiter, wie z.B. ein weiterer Fahrdraht oder ein weiteres Tragseil, berühren und dadurch die beiden kreuzenden Leiter zumindest auf Dauer beschädigt würden. Das erfindungsgemäße Verbindungsteil weist somit eine, um den lichten Raum umgreifende Form auf, wodurch demzufolge das Verbindungsteil im Bereich der möglichen Kollisionsstelle mit einem kreuzenden Leiter um den freizuhaltenden Bereich herumgeführt wird, somit den notwendigen Lichtraum herstellt und demzufolge Berührungen, bzw. eine Kollision zweier kreuzender Leiter, sowie entsprechende Beschädigungen an diesen kreuzenden Leitern verhindert.

Dadurch dass das erfindungsgemäße Verbindungsteil mit dem einem Ende mittels der ersten Verbindungsvorrichtung, z. B. einer üblichen Klemmverbindung, direkt mit der ersten Oberleitung, z.B. einem Tragseil und mit dem anderen Ende mittels der zweiten Verbindungsvorrichtung, z. B. ebenfalls einer üblichen Klemmverbindung, direkt mit der zweiten Oberleitung, z.B. einem Fahrdraht verbunden ist, kann die Verbindung zwischen zwei Oberleitungen, z.B. zwischen einem Tragseil und einem Fahrdraht, vorteilhafterweise mit nur einem Verbindungsteil, beispielsweise einer Bogen- oder Hängerklemme, und den beiden Verbindungsvorrichtungen, aber ohne weitere, zusätzliche Verbindungselemente, bei gleichzeitiger Herstellung des notwendigen Lichtraums realisiert werden. Besonders bevorzugt ist das Verbindungsteil als gebogenes Element, beispielsweise eine Bogen- oder Hängerklemme ausgeführt. Somit kann das erfindungsgemäße Verbindungsteil, beispielsweise eine Bogen- oder Hängerklemme, sehr einfach direkt an den Oberleitungen, z.B. am Tragseil bzw. am Fahrdraht angeklemmt werden.

Besonders bevorzugt kann das Verbindungsteil nicht nur einteilig sondern auch mehrteilig ausgeführt sein, um eine flexible Anpassung an die gewünschte geometrische Form des Verbindungsteils zu ermöglichen. Dabei kann das Verbindungsteil aus zwei, drei oder mehr Teilen aufgebaut sein.

Nach einer weiteren bevorzugten Ausführungsform der Erfindung besteht das Verbindungsteil aus wenigstens einem gebogenen Element und wenigstens einem Verbindungselement, wobei entweder das gebogene Element mit einem ersten Ende mittels der ersten Verbindungsvorrichtung mit der ersten Oberleitung und mit dem zweiten Ende mit dem Verbindungselement verbunden ist, wobei das Verbindungselement mittels der zweiten Verbindungsvorrichtung mit der zweiten Oberleitung verbunden ist, oder das gebogene Element mit dem ersten Ende mit dem Verbindungselement verbunden ist, wobei das Verbindungselement mittels der ersten Verbindungsvorrichtung mit der ersten Oberleitung und mit dem zweiten Ende mittels der zweiten Verbindungsvorrichtung mit der zweiten Oberleitung verbunden ist.

Nach einer ebenfalls bevorzugten Ausführungsform der Erfindung besteht das Verbindungsteil aus wenigstens einem gebogenen Element und wenigstens einem ersten und einem zweiten Verbindungselement, wobei das gebogene Element mit einem ersten Ende mit dem ersten Verbindungselement und mit dem zweiten Ende mit dem zweiten Verbindungselement verbunden ist, wobei das erste Verbindungselement mittels der ersten Verbindungsvorrichtung mit der ersten Oberleitung und das zweite Verbindungselement mittels der zweiten Verbindungsvorrichtung mit der zweiten Oberleitung verbunden ist.

Bei den oben genannten Varianten kann die Größe des erfindungsgemäßen Verbindungsteils und demzufolge die Ausdehnung des gekrümmten Bereichs und damit des Lichtraums vorteilhafterweise je nach Bedarf sehr genau an die lokalen Anforderungen angepasst werden. Das Verbindungsteil, beispielsweise die Bogen- oder Hängerklemme, kann dabei sehr einfach direkt an den entsprechenden Verbindungselementen, z.B. an Hängerseilen bzw. an den Oberleitungen, z.B. am Tragseil oder am Fahrdraht angeklemmt werden.

Nach einer weiteren bevorzugten Ausführungsform der Erfindung besteht das Verbindungsteil aus wenigstens drei starren, miteinander verbindbaren Elementen, wobei das erste Element die erste Verbindungsvorrichtung und das zweite Element die zweite Verbindungsvorrichtung aufweist, und wobei das erste und zweite Element mittels des dritten Elements miteinander verbunden sind. Dabei ist besonders bevorzugt der Abstand zwischen der Verbindungsstelle des ersten und des dritten Elements und der Verbindungsstelle des zweiten und des dritten Elements einstellbar. Vorteilhafterweise sind die drei Elemente starr, z.B. aus Metall ausgeführt, wobei das erste und zweite Element bevorzugt baugleich und im Wesentlichen viertelkreisförmig ausgeführt sind, um einerseits den lichten Raum zu gewährleisten und andererseits Produktionsvorteile nutzen zu können. Das Verbindungsstück, das dritte Element, kann dabei als im Wesentlichen gerade ausgeführt sein. Dabei hat die einstellbare Verbindung zwischen dem ersten und dem zweiten Element mittels des Verbindungsstücks, des dritten Elements, den Vorteil, den Abstand zwischen den zu verbindenden Oberleitungen, z.B. Tragseil und Fahrdraht exakt und auf äußerst einfache Weise anpassen zu können. Dabei kann die Verbindung bevorzugt stufenlos einstellbar sein. Die im Wesentlichen viertelkreisförmigen Elemente können jeweils fest an den Oberleitungen, z.B. am Tragseil und am Fahrdraht befestigt werden, um ein seitliches Verdrehen des Verbindungsteils und eine Reduzierung des lichten Raumes zu unterbinden. Dabei ist die Anzahl der Elemente nicht auf drei beschränkt. Es sind hier auch Lösungen mit nur zwei, aber selbstverständlich auch mit mehr als drei Elementen denkbar. Auch die Form der Elemente ist nicht auf die oben beschriebene Form beschränkt, sondern es sind hier alle möglichen Formen möglich und denkbar, sofern der geforderte lichte Raum gewährleistet ist.

Nach einer weiteren bevorzugten Ausführungsform der Erfindung ist das zweite Element an dem, der Verbindungsstelle des zweiten und des dritten Elements abgewandten Ende mit einem Verbindungselement verbunden ist, wobei das Verbindungselement mittels der zweiten Verbindungsvorrichtung mit der zweiten Oberleitung verbunden ist. Dabei befindet sich die zweite Verbindungseinrichtung nicht mehr am zweiten Element, sondern am Verbindungselement und ist damit mit der zweiten Oberleitung, z.B. einem Fahrdraht verbunden.

Auch bei dieser Variante kann die Größe des erfindungsgemäßen Verbindungsteils und demzufolge die Ausdehnung des gekrümmten Bereichs und damit des Lichtraums vorteilhafterweise je nach Bedarf sehr genau an die lokalen Anforderungen angepasst werden.

Besonders bevorzugt ist wenigstens ein Verbindungselement ein Hängerseil, da hier die Montage besonders einfach ist.

Ebenfalls besonders bevorzugt ist wenigstens ein Verbindungselement als starres Profil ausgeführt. Der Vorteil dieser Ausführung ist, dass, wenn benötigt und gewünscht, feste, ggf. vorgegebene Abstände, z.B. zwischen Verbindungsteil und Oberleitung, beispielsweise der Fahrleitung oder dem Tragseil, dauerhaft eingehalten werden können. Ein weiterer Vorteil ist die Realisierung windschiefer Lösungen bei der eine erste und eine zweite Oberleitung, z.B. ein Tragseil und ein Fahrdraht, nicht parallel, sondern unter einem gewissen Winkel auseinanderlaufen, beispielsweise bis zu 90° Grad versetzt verlaufen. Dabei kann das Verbindungselement auch als einfach oder mehrfach genicktes Profil ausgeführt sein.

Nach einer besonders bevorzugten Ausführungsform der Erfindung ist das Verbindungsteil, beispielsweise die Bogen- oder Hängerklemme, im Wesentlichen halbkreisförmig ausgestaltet. Die halbkreisförmige Ausgestaltung ist insbesondere aus Stabilitätsgründen, aber auch aus raumgeometrischen Erwägungen besonders vorteilhaft, da der Abstand zu einem zweiten, kreuzenden Leiter über den gesamten gekrümmten Bereich im Wesentlichen gleich bleibt. Der Krümmungsradius kann dabei ohne Einschränkung beliebig gestaltet werden. Selbstverständlich kann das gekrümmte bzw. auch gebogene Verbindungsteil darüber hinaus, je nach Anforderung, aber alle weiteren beliebigen, sinnvollen geometrischen Formen, beispielsweise klothoidale, elliptische, aber auch eckige Formen, annehmen. Ein Abknicken und somit eine Beschädigung eines Verbindungselements, z.B. eines Hängerseils ist darüber hinaus systembedingt ausgeschlossen. Das um den Kollisionspunkt umgreifende Verbindungsteil, z.B. eine gebogene Klemme bzw. Bogenklemme kann auch bei kleinen Systemhöhen, bei denen der Abstand zwischen den Oberleitungen, z.B. Fahrdraht und Tragseil, sehr gering ist, problemlos eingesetzt werden.

Nach einer weiteren bevorzugten Ausführungsform der Erfindung bleibt das Verbindungsteil bei Belastung im Wesentlichen formbeständig. Somit kann das gekrümmte, bzw. gebogene Verbindungsteil insbesondere mit Zugkräften belastet werden und gleichzeitig seitlich wirkende Kräfte aufnehmen, ohne dass sich dessen Form plastisch verändert.

Nach einer besonders bevorzugten Ausführungsform der Erfindung besteht das Verbindungsteil wenigstens aus einem Hängerseil und einer Bogenschiene, wobei die Bogenschiene mit dem Hängerseil verbunden ist. Durch die Krümmung der im Wesentlichen starren Bogenschiene und deren Verbindung mit dem Hängerseil kann eine dauerhafte Krümmung des Hängerseils im Bereich einer möglichen Kollisionsstelle mit einem weiteren, kreuzenden Leiter realisiert werden. Dabei kann die Bogenschiene an jeder beliebigen, insbesondere notwendigen Stelle, je nach Anforderung, mit dem Hängerseil verbunden werden und dieses entsprechend krümmen, so dass die Bogenschiene insbesondere entlang des durchgehenden Hängerseils sehr einfach verschoben werden kann, falls eine Nachregulierung erforderlich ist. Auch die Länge bzw. der Krümmungsradius der Bogenschiene kann dabei beliebig ausgestaltet werden. Darüber hinaus ist eine Krümmung der Bogenschiene nach allen sinnvollen Richtungen, insbesondere alternativ sowohl eine Links- als auch eine Rechtskrümmung möglich und von der Erfindung umfasst. Die Bogenschiene dient dabei zur Führung des Hängerseils, ohne dieses selbst zu ersetzen, oder zu trennen, bzw. zu zerschneiden. Das Hängerseil wird dabei über die gesamte Länge der Bogenschiene mitgeführt und ist zwischen den Anklemmpunkten an den Oberleitungen, z. B. am Fahrdraht und am Tragseil, an keiner Stelle unterbrochen. Demzufolge werden auch die elektrischen Kennwerte des Hängerseils, wie z.B. die Stromtragfähigkeit bei Bronzeseilen, nicht beeinflusst, da das Hängerseil durchgängig verläuft. Somit müssen hinsichtlich der Bogenschiene keine besonderen elektrischen Anforderungen berücksichtigt werden, was im Falle eines nicht durchgehenden Seiles in der Regel der Fall ist. Die bisher eingesetzten, jeweiligen Klemmverbindungen des Hängerseils an den Anklemmpunkten an den Oberleitungen, also am Fahrdraht und am Tragseil können überdies ohne Veränderung weiterverwendet werden.

Die Bogenschiene führt demzufolge vorteilhafterweise das Hängerseil im Bereich einer möglichen Kollisionsstelle mit einer weiteren Oberleitung, also einem weiteren kreuzenden Leiter, wie z.B. einem weiteren Fahrdraht oder einem weiteren Tragseil, um den freizuhaltenden Bereich herum, stellt somit den notwendigen Lichtraum her und verhindert demzufolge Berührungen, bzw. eine Kollision zweier kreuzender Leiter, sowie entsprechende Beschädigungen an diesen kreuzenden Leitern. Dabei kann die Bogenschiene, je nach Ausprägung und Bedarf, das Hängerseil insbesondere nach links oder nach rechts um den Bereich des freizuhaltenden Lichtraumes herumführen.

Weiterhin ist die Bogenschiene bevorzugt im Wesentlichen halbkreisförmig ausgestaltet. Die halbkreisförmige Ausgestaltung ist insbesondere aus Stabilitätsgründen, aber auch aus raumgeometrischen Erwägungen besonders vorteilhaft, da der Abstand zu einem zweiten, kreuzenden Leiter über den gesamten gekrümmten Bereich im Wesentlichen gleich bleibt. Durch die besonders bevorzugte (halb-)kreisförmige Führung des Hängerseils werden lokale Maxima der auftretenden Seitenkräfte und damit ein Abknicken des Hängerseils vermieden. Selbstverständlich kann die Bogenschiene darüber hinaus, je nach Anforderung, aber alle weiteren beliebigen, sinnvollen geometrischen Formen, beispielsweise klothoidale, elliptische, aber auch eckige Formen, annehmen.

Nach einer weiteren bevorzugten Ausführungsform der Erfindung bleibt die Bogenschiene bei Belastung im Wesentlichen formbeständig. Somit kann die Bogenschiene mit Kräften, insbesondere mit Zugkräften nach unten belastet werden und darüber hinaus gleichzeitig seitlich wirkende Kräfte aufnehmen, ohne dass sich deren Form plastisch verändert.

Nach einer weiteren bevorzugten Ausführungsform der Erfindung weist die Bogenschiene wenigstens ein Führungselement auf, in dem das Hängerseil einklemmbar ist.

Besonders bevorzugt weist das wenigstens eine Führungselement der Bogenschiene einen Deckel auf, mit dem das Hängerseil in dem wenigstens einen Führungselement der Bogenschiene festklemmbar ist.

In diese Führungselemente, die als Klemmstellen für das Hängerseil dienen, kann das Hängerseil zu dessen Führung sehr einfach, beispielsweise durch entsprechendes Eindrücken, eingeklemmt werden. Je nach Bedarf können hierzu auf der Bogenschiene vorteilhafterweise wenigstens eine einzelne bis beliebig viele Führungselemente als Klemmstellen angeordnet sein, wobei die Führungselemente die seitlich wirkenden Kräfte aufnehmen. Selbst ein als durchgehende, vorgeformte Rinne ausgestaltetes Führungselement ist möglich und denkbar. Durch die Verwendung eines Deckels, der auf das jeweilige Führungselement aufgesetzt oder aufgedrückt wird, wird der Halt des Hängerseils in den Führungselementen der Bogenschiene bzw. auf der Bogenschiene zusätzlich abgesichert.

Die Bogenschiene ist demzufolge besonders einfach und aufwandsarm an einem Hängerseil zu befestigen, bzw. zu montieren.

Nach einer weiteren besonders bevorzugten Ausführungsform der Erfindung ist die Bogenschiene zweiteilig aufgebaut, wobei die zwei Teile der Bogenschiene derart geformt sind, dass die zwei Teile der Bogenschiene das Hängerseil über die Länge der Bogenschiene umschließen und einklemmen.

Vorteilhafterweise ist die Bogenschiene zweigeteilt und derart geformt, dass sie eine Kontur des gewünschten Seilverlaufs aufweist und damit als "Negativ" dient. Das Hängerseil wird in diesem Fall zwischen zwei spiegelbildliche Teile der Bogenschiene eingeklemmt, wobei das eine Teil als Oberteil und das andere Teil als Unterteil dient. Der Zusammenhalt der beiden Teile der Bogenschiene kann dabei auf jede beliebige, übliche und denkbare Weise, beispielsweise durch Klemm-, Clips-, Schnapp- oder auch Klebverbindungen, vorgenommen werden. Die seitlichen Kräfte werden dabei unmittelbar von der Bogenschiene selbst aufgenommen.

Besonders bevorzugt ist eine Oberleitungsanlage mit wenigstens einer Verbindungsanordnung nach einem der Ansprüche 1 bis 18 ausgestattet.

Zusammengefasst ermöglicht es die erfindungsgemäße Verbindungsanordnung Fahrleitungen auch bei sehr kurvenreichen Strecken mit geringen Kurvenradien zu bauen. Somit ist die Verbindungsanordnung sowie Oberleitungssysteme mit solchen Verbindungsanordnungen sowohl für schienengebundene als auch für nicht schienengebundene elektrische Fahrzeuge also insbesondere auch für eHighway-Systeme für LKWs oder E-Busse einsetzbar und geeignet.

Im Weiteren werden bevorzugte Ausführungsbeispiele der Erfindung mit Bezugnahme auf die Zeichnungen näher erläutert. Es zeigen:
- Fig. 1: eine erfindungsgemäße Verbindungsanordnung mit einem gebogenen Element und zwei Hängerseilen,
- Fig. 2: eine erfindungsgemäße Verbindungsanordnung mit einer Bogenschiene,
- Fig. 3: einen Querschnitt einer Bogenschiene mit Führungselement und
- Fig. 4: einen Querschnitt einer zweigeteilten Bogenschiene.
- Fig. 5: eine weitere Variante einer erfindungsgemäßen Verbindungsanordnung mit einem mehrteiligen Verbindungsteil und
- Fig. 6: eine erfindungsgemäße Verbindungsanordnung für eine windschiefe Oberleitungsanordnung.

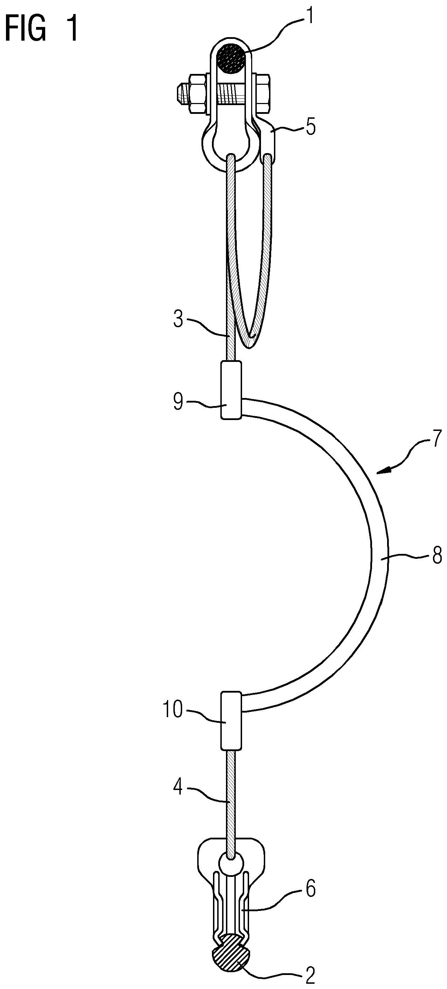

Fig. 1 zeigt eine erfindungsgemäße Verbindungsanordnung 7 mit einem gebogenen Element 8 und zwei Hängerseilen 3, 4.

Dabei ist das gebogene Element 8 eine gebogene Klemme, bzw. Bogenklemme oder auch Hängerklemme, welches mittels dem ersten Ende 9 mit dem ersten Hängerseil 3 und mittels dem zweiten Ende 10 mit dem zweiten Hängerseil 4 verbunden ist. Weiter ist das erste Hängerseil 3 mittels einer üblichen Klemmverbindung 5 dem Tragseil 1 und das zweite Hängerseil 4 mittels einer entsprechenden, ebenfalls üblichen Klemmverbindung 6 mit dem Fahrdraht 2, also mit den entsprechenden Oberleitungen verbunden.

Mittels der Bogenklemme 8 entsteht ein Bereich zwischen dem ersten Ende 9 und dem zweiten Ende 10 der Bogenklemme 8, um den die Bogenklemme 8 und somit die Verbindungseinrichtung 7 herumgeführt wird, so dass die Verbindungseinrichtung 7 einen, sich in diesem Raum befindlichen, hier nicht dargestellten, weiteren, kreuzenden Leiter, wie z.B. eine weitere Oberleitung, also einen weiteren Fahrdraht oder ein weiteres Tragseil, nicht berührt, bzw. nicht mit diesem kollidiert und somit entsprechende Beschädigungen an diesen kreuzenden Leitern verhindert.

Somit entsteht mittels der Bogenklemme 8 der Verbindungseinrichtung 7 ein Lichtraum rund um einen, sich in diesem Raum, insbesondere in der Mitte auf einer gedachten, direkten Verbindungslinie vom ersten Ende 9 zum zweiten Ende 10 der Bogenklemme 8, befindlichen, hier nicht dargestellten, weiteren kreuzenden Leiter, wie z.B. einem weiteren Fahrdraht oder einem weiteren Tragseil, der frei von Gegenständen, insbesondere weiteren Leitern ist, bzw. freigehalten wird. Dadurch werden, wie oben bereits ausgeführt, dauerhaft Berührungen, bzw. Kollisionen zwischen der Verbindungseinrichtung 7 und einer weiteren kreuzendem Oberleitung, also einem weiteren kreuzenden Leiter, sowie entsprechende Beschädigungen vermieden.

Die Größe der Bogenklemme 8 und demzufolge die Ausdehnung des Bereichs zwischen den beiden Enden 9 und 10, und somit des Lichtraums, kann dabei, je nach Bedarf, sehr genau und spezifisch an die jeweiligen lokalen Anforderungen angepasst werden.

Die in der Fig. 1 dargestellte Bogen- oder Hängerklemme 8 ist im Wesentlichen halbkreisförmig ausgestaltet, wobei der Mittelpunkt des Halbkreises vorteilhafterweise auf der gedachten, direkten Verbindungslinie vom ersten Ende 9 zum zweiten Ende 10 liegt. Die halbkreisförmige Ausgestaltung ist insbesondere aus Stabilitätsgründen, aber auch aus raumgeometrischen Erwägungen besonders vorteilhaft, da der Abstand zu einem weiteren kreuzenden Leiter, der sich etwa im Mittelpunkt des Halbkreises befindet (hier nicht dargestellt), dadurch über den gesamten gekrümmten Bereich im Wesentlichen gleich bleibt. Der Krümmungsradius kann dabei ohne Einschränkung beliebig gestaltet werden. Selbstverständlich kann die gebogene Klemme, bzw. Bogenklemme 8 darüber hinaus, je nach Anforderung, alle weiteren beliebigen, sinnvollen geometrischen Formen, beispielsweise klothoidale, elliptische, aber auch eckige Formen, annehmen. Ein Abknicken und somit eine Beschädigung eines Hängerseils 3, 4 ist systembedingt ausgeschlossen. Die Bogenklemme 8 kann auch bei kleinen Systemhöhen, bei denen der Abstand zwischen Fahrdraht 2 und Tragseil 1 sehr gering ist, problemlos eingesetzt werden.

Darüber hinaus ist die in Fig. 1 gezeigte Bogenklemme 8 bei Belastung im Wesentlichen formbeständig. Somit kann die Bogenklemme 8 insbesondere mit Zugkräften belastet werden und gleichzeitig seitlich wirkende Kräfte aufnehmen, ohne dass sich deren Form plastisch verändert.

Neben der in Fig. 1 dargestellten, erfindungsgemäßen Verbindungsanordnung 7 gibt es entsprechende weitere, nicht dargestellte Varianten der Verbindungsanordnung 7, die im Wesentlichen dieselben Eigenschaften bzw. Vorteile aufweisen und die, je nach lokalen Anforderungen, insbesondere abhängig von den Abständen der Oberleitungen zueinander, also beispielsweise vom Abstand des Tragseils 1 zum Fahrdraht 2 eingesetzt werden können.

So können bei einer weiteren Variante die beiden Hängerseile 3 und 4 wegfallen, sodass die Bogenklemme 8 auf einfache Weise mit dem einen Ende 9 mittels der ersten Verbindungsvorrichtung 5 direkt an das Tragseil 1 und mit dem anderen Ende 10 mittels der zweiten Verbindungsvorrichtung 6 direkt an den Fahrdraht 2 angeklemmt werden kann bzw. wird. Die Verbindungsvorrichtungen 5, 6 können beispielsweise jeweils übliche Klemmverbindungen sein.

Bei zwei weiteren, ebenfalls nicht dargestellten Varianten wird jeweils nur ein Hängerseil 3 oder 4 benötigt. Bei der einen Variante wird die Bogenklemme 8 mittels des ersten Endes 9 mit der ersten Verbindungsvorrichtung 5, beispielsweise einer üblichen Klemmverbindung, direkt am Tragseil 1 angeklemmt und mit dem anderen Ende 10 mit dem Hängerseil 4 verbunden, wobei das Hängerseil 4 dann wiederum über eine üblicherweise eingesetzte Klemmverbindung 6, der zweiten Verbindungsvorrichtung, am Fahrdraht 2 angeklemmt wird.

Bei der zweiten Variante wird die Bogenklemme 8 mittels des zweiten Endes 10 mit der zweiten Verbindungsvorrichtung 6, beispielsweise einer üblicherweise eingesetzten Klemmverbindung 6, direkt am Fahrdraht 2 angeklemmt und mit dem ersten Ende 9 mit dem Hängerseil 3 verbunden, wobei das Hängerseil 3 dann wiederum über eine üblicherweise eingesetzte Klemmverbindung 5, der ersten Verbindungsvorrichtung, am Tragseil 1 angeklemmt wird.

In allen Varianten, bei denen als Verbindungselement zwischen gebogenem bzw. gekrümmten Element 8 und den entsprechenden Oberleitungen 1, 2 ein Hängerseil 3, 4 eingesetzt wird, kann alternativ anstelle des Hängerseils 3, 4 selbstverständlich jeweils auch ein beliebiges anderes Verbindungselement, insbesondere ein starres Profil, beispielsweise aus Metall verwendet werden, dessen Form, beispielsweise runder oder eckiger Querschnitt, nicht beschränkt ist.

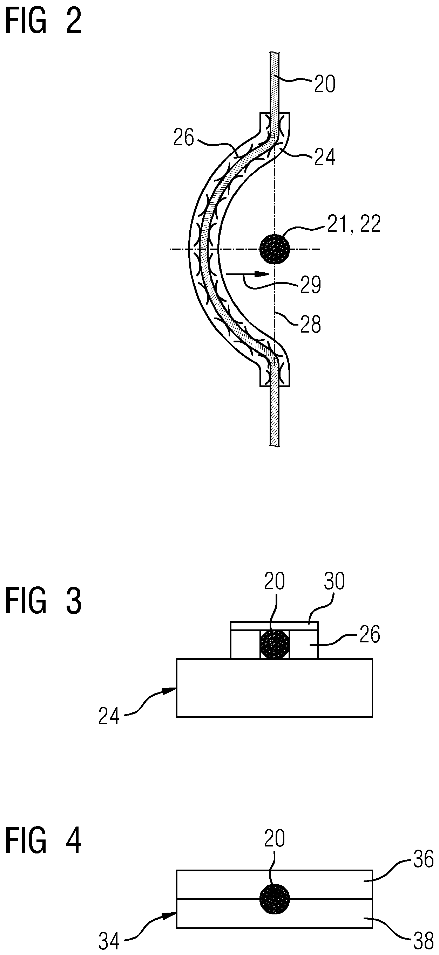

Fig. 2 zeigt eine erfindungsgemäße Verbindungsanordnung mit einer Bogenschiene 24, die mit dem Hängerseil 20 verbunden ist. Dabei ist das Hängerseil 20 in üblicher Weise direkt an ein, hier nicht dargestelltes, darüber liegendes Tragseil und an einen, ebenfalls hier nicht dargestellten, darunter liegenden Fahrdraht angeklemmt. Die üblicherweise dafür eingesetzten, jeweiligen Klemmverbindungen des Hängerseils 20 an den nicht dargestellten Anklemmpunkten am Fahrdraht 2 und am Tragseil 1 können demzufolge ohne Veränderung weiterverwendet werden.

Bei der in Fig. 2 gezeigten Verbindungsanordnung wird der notwendige Lichtraum um einen, sich in diesem Raum befindlichen, weiteren kreuzenden Leiter, wie z.B. einem weiteren Fahrdraht 22 oder einem weiteren Tragseil 21, dadurch realisiert, dass die gekrümmte Bogenschiene 24 mit dem Hängerseil 20 verbunden wird, wobei das Hängerseil 20 in Führungselemente 26, die an der Bogenschiene 24 angebracht sind, eingeklemmt werden kann. Somit wird das zugbelastete Hängerseil 20 um den Bereich, in dem sich, insbesondere auf dessen gedachter Kraftlinie 28, der weitere, kreuzende Leiter, wie z.B. ein weiterer Fahrdraht 22 oder ein weiteres Tragseil 21, befindet, außerhalb seiner Kraftlinie 28 herumgeführt. Dadurch werden dauerhaft Berührungen, bzw. Kollisionen zwischen der erfindungsgemäßen Verbindungseinrichtung, im Wesentlichen bestehend aus dem Hängerseil 20 und der, mit dem Hängerseil 20 verbundenen Bogenschiene 24, und dem weiteren kreuzenden Leiter 21, 22, sowie entsprechende Beschädigungen an diesen kreuzenden Leitern vermieden.

In die in Fig. 2 dargestellten Führungselemente 26, die als Klemmstellen für das Hängerseil 20 dienen, wird das Hängerseil 20 zu dessen Führung sehr einfach, beispielsweise durch entsprechendes Eindrücken, eingeklemmt. Die auf der Bogenschiene 24 angeordneten Führungselemente 26 sind jedoch weder auf die Anzahl noch auf die Form festgelegt, wie sie in Fig. 2 dargestellt ist. So sind alle möglichen, sinnvollen Formen sowie auch eine beliebige, variable Anzahl von Führungselementen 26 von der Erfindung umfasst und können je nach Bedarf entsprechend angepasst werden. Selbst ein, als durchgehende, vorgeformte Rinne ausgestaltetes Führungselement 24 ist möglich und denkbar.

Die Bogenschiene 24 kann demzufolge besonders einfach und aufwandsarm am Hängerseil 20 befestigt, bzw. montiert werden.

Eine dauerhafte Krümmung des Hängerseils 20 im Bereich einer möglichen Kollisionsstelle mit einem weiteren, kreuzenden Leiter 21, 22 wird dementsprechend durch die Krümmung der im Wesentlichen starren Bogenschiene 24 und deren Verbindung mit dem Hängerseil 20 gewährleistet. Dabei kann die Bogenschiene 24 an jeder beliebigen, insbesondere notwendigen Stelle, je nach Anforderung, mit dem Hängerseil 20 verbunden werden und dieses entsprechend krümmen, so dass die Bogenschiene 26 insbesondere entlang des durchgehenden Hängerseils 20 sehr einfach verschoben werden kann, falls eine Nachregulierung erforderlich ist. Auch die Länge bzw. der Krümmungsradius der Bogenschiene 24 ist beliebig ausgestaltbar. Darüber hinaus ist eine Krümmung der Bogenschiene 20 nach allen sinnvollen Richtungen möglich. Insbesondere kann das Hängerseil 20 trotz Zugbelastung nicht nur, wie in Fig. 2 dargestellt, links um den zweiten Leiter 21, 22 sondern alternativ selbstverständlich auch rechts herumgeführt werden. Die Bogenschiene 24 dient dabei zur Führung des Hängerseils 20, ohne dieses selbst zu ersetzen, oder zu trennen, bzw. zu zerschneiden. Das Hängerseil 20 wird dabei über die gesamte Länge der Bogenschiene 24 mitgeführt und ist zwischen den Anklemmpunkten am Fahrdraht 2 und am Tragseil 1 (hier nicht dargestellt) an keiner Stelle unterbrochen. Demzufolge werden auch die elektrischen Kennwerte des Hängerseils 20, wie z.B. die Stromtragfähigkeit bei Bronzeseilen, nicht beeinflusst, da das Hängerseil 20 durchgängig ist. Somit müssen hinsichtlich der Bogenschiene 24 keine besonderen elektrischen Anforderungen berücksichtigt werden, was im Falle eines nicht durchgehenden Seiles 20 in der Regel der Fall wäre.

Die in der Fig. 2 dargestellte Bogenschiene 24 ist analog zur Bogenklemme 8 aus der Fig. 1 im Wesentlichen halbkreisförmig ausgestaltet, wobei der Mittelpunkt des Halbkreises vorteilhafterweise auf der gedachten Kraftlinie 28 liegt. Die halbkreisförmige Ausgestaltung ist insbesondere aus Stabilitätsgründen, aber auch aus raumgeometrischen Erwägungen besonders vorteilhaft, da der Abstand zu dem zweiten, kreuzenden Leiter 21, 22, der sich etwa im Mittelpunkt des Halbkreises befindet, dadurch über den gesamten gekrümmten Bereich der Bogenschiene 24 im Wesentlichen gleich bleibt. Der Krümmungsradius kann dabei ohne Einschränkung ebenfalls, je nach Bedarf, beliebig ausgestaltet werden. Durch die (halb-)kreisförmige Führung des Hängerseils 20 werden lokale Maxima der auftretenden Seitenkräfte 29 und damit ein Abknicken des Hängerseils 20 entsprechend vermieden. Selbstverständlich kann die Bogenschiene 24 darüber hinaus, je nach Anforderung, aber alle weiteren, möglichen, sinnvollen geometrischen Formen, beispielsweise klothoidale, elliptische, aber auch eckige Formen, annehmen.

Darüber hinaus ist die in Fig. 2 gezeigte Bogenschiene 24 bei Belastung im Wesentlichen formbeständig. Somit kann die Bogenschiene 24 mit Kräften, insbesondere mit Zugkräften nach unten, entlang der Kraftlinie 28 belastet werden und darüber hinaus gleichzeitig auch seitlich wirkende Kräfte 29 aufnehmen, ohne dass sich deren Form plastisch verändert. Die seitlichen Kräfte werden dabei über die Führungselemente 26 in die Bogenschiene eingeleitet, bzw. übertragen.

Fig. 3 zeigt einen Querschnitt der Bogenschiene 24 mit einem Führungselement 26, in welches das Hängerseil 20 eingeklemmt ist. Durch die Verwendung eines Deckels 30, der auf das jeweilige Führungselement 26 aufgesetzt oder aufgedrückt wird, wird der Halt des Hängerseils 20 in den Führungselementen 26 der Bogenschiene 24 zusätzlich abgesichert.

Fig. 4 zeigt einen Querschnitt einer zweigeteilten Bogenschiene 34.

Anstelle der vorher in Fig. 2 und 3 gezeigten Bogenschiene 24 mit Führungselementen 26 ist die, in Fig. 4 nur im Querschnitt dargestellte Bogenschiene 34 zweiteilig und derart geformt, dass die zwei Teile 36 und 38 der Bogenschiene 34 das Hängerseil 20 über die Länge der Bogenschiene 34 umschließen und einklemmen. Die Bogenklemme 34 weist erfindungsgemäß somit eine vorgefertigte Kontur des gewünschten Verlaufs für das Hängerseil 20 auf und dient demzufolge als "Negativ". Das Hängerseil 20 wird in diesem Fall zwischen zwei spiegelbildliche Teile 36 und 38 der Bogenschiene 34 eingeklemmt, wobei das eine Teil 36 als Oberteil und das andere Teil 38 als Unterteil dient. Der Zusammenhalt der beiden Teile 36 und 38 der Bogenschiene 34 kann dabei auf jede mögliche, übliche und denkbare Weise, beispielsweise durch Klemm-, Clips-, Schnapp- oder auch Klebverbindungen, vorgenommen werden. Die seitlichen Kräfte bei dieser Form der Bogenschiene 34 werden hier unmittelbar von der Bogenschiene 34 selbst aufgenommen.

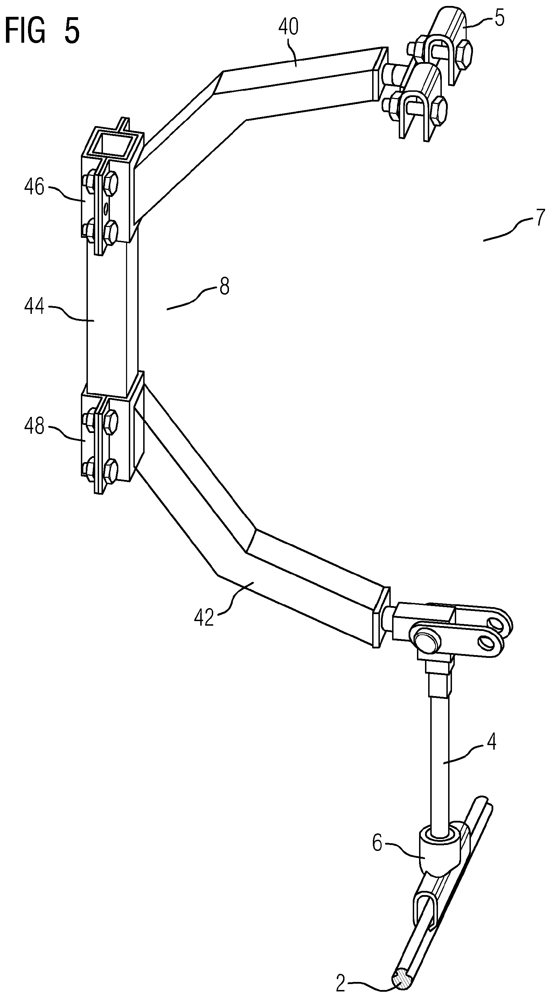

Fig. 5 zeigt eine weitere Variante einer erfindungsgemäßen Verbindungsanordnung 7 mit einem mehrteiligen Verbindungsteil 8. Anstelle des gebogenen Elements, beispielsweise der Bogenoder auch Hängerklemme, gemäß Fig. 1 besteht das hier dargestellte, mehrteilig ausgeführte Verbindungsteil 8 aus drei starren, miteinander verbundenen Elementen 40, 42, 44. Vorteilhafterweise sind die drei Elemente 40, 42, 44 aus Metall, wobei das erste 40 und zweite 42 Element bevorzugt baugleich und im Wesentlichen viertelkreisförmig ausgeführt sind, um den lichten Raum zu gewährleisten. Die hier gezeigten Elemente 40 und 42 sind im Wesentlichen Vier-Kant-Profile mit quadratischem Querschnitt, die, bezogen auf die Länge der Elemente 40, 42, jeweils etwa mittig einfach geknickt ausgeführt sind. Dabei schließt der in Fig. 5 gezeigte Knick bei beiden Elementen 40, 42 jeweils etwa 135° Grad ein. Die erfindungsgemäße Verbindungsanordnung 7 ist dabei jedoch nicht auf die hier gezeigten Merkmale beschränkt, sondern es können ggf. alle möglichen anderen gewünschten Formen und/oder Querschnitte, beispielsweise Vollprofile, Hohlprofile mit vollständigen Seiten, Hohlprofile, deren Seiten nur aus tragenden Strukturen bestehen, rechteckige oder runde Querschnitte, etc. hierfür verwendet werden. Auch die Anzahl und/oder der Ort der Knicke und /oder der eingeschlossene Winkel eines der Knicke kann grundsätzlich, falls erforderlich und/oder gewünscht mit beliebigen anderen Werten umgesetzt werden. Das Verbindungsstück, das dritte Element 44, ist gemäß Darstellung in Figur 5 ein im Wesentlichen gerades Hohlprofil mit im Wesentlichen quadratischem Querschnitt, wobei selbstverständlich auch hierfür beliebige andere Formen und/oder Querschnitte eingesetzt werden können. Dabei ist das Element 44 mittels der Verbindungsvorrichtung 46 mit dem Element 40 und mittels der Verbindungsvorrichtung 48 mit dem Element 42 verbunden. Die Verbindungsvorrichtungen 46 und 48 sind dabei baugleich und bestehen jeweils aus zwei Hälften, die das Verbindungsstück 44 an zwei unterschiedlichen Positionen anliegend umfassen und mit Schrauben kraftschlüssig verbinden. Durch Lockern oder Lösen der kraftschlüssigen Verbindungen können die Verbindungsvorrichtungen 46 und/oder 48 entlang des Elements 44 bewegt bzw. verschoben, also aufeinander zu oder voneinander wegbewegt werden, wodurch der Abstand der Elemente 40 und 42 voneinander stufenlos einstellbar ist. Das Element 40 ist dabei direkt mit zumindest einer Hälfte der Verbindungsvorrichtung 46 und das Element 42 direkt mit zumindest einer Hälfte der Verbindungsvorrichtung 48 z. B. verschweißt, geklebt oder auf anderweitige übliche Weise verbunden. In verbundenem Zustand schließen die Elemente 40 und 44 sowie die Elemente 42 und 44 beispielhaft dargestellt ebenfalls einen Winkel von ca. 135° ein. Dabei hat die stufenlos einstellbare Verbindung zwischen dem ersten 40 und dem zweiten 42 Element mittels des Verbindungsstücks, des dritten Elements 44, den Vorteil, den Abstand zwischen den zu verbindenden Oberleitungen 1, 2, z.B. einem Tragseil und einem Fahrdraht exakt und auf äußerst einfache Weise anpassen zu können. Zur Befestigung der erfindungsgemäßen Verbindungsanordnung 7 weist das erste Element 40 eine im Vergleich zu Fig. 1 weitere, üblicherweise verwendete Klemmvorrichtung 5 auf, mit der die Verbindungsanordnung 7 direkt an die erste Oberleitung 1, z. B. ein Tragseil (hier nicht dargestellt) angeklemmt wird. In der vorliegend dargestellten Ausführungsform der Erfindung ist weiterhin das zweite Element 42 des Verbindungsteils 8 an dem, der Verbindungsstelle des zweiten 42 und des dritten Elements 44 abgewandten Ende zunächst mit einem Verbindungselement 4, hier ein starres Profil mit kreisförmigem Querschnitt, verbunden. Dieses Profil 4 weist eine weitere übliche Klemmvorrichtung 6 auf, mittels derer das Profil 4 und somit die Verbindungseinrichtung 7 dann an die zweite Oberleitung 2, z.B. einem Fahrdraht, festgeklemmt ist. Auch das Verbindungselement 4 ist nicht auf die hier gezeigten Merkmale beschränkt, sondern kann ggf. alle möglichen anderen gewünschten, bzw. geeigneten Formen und/oder Querschnitte, annehmen.

Das Verbindungselement 4 kann alternativ auch als Hängerseil ausgeführt sein.

Bei einer hier nicht dargestellten weiteren alternativen Ausführung der Erfindung ist die zweite übliche Klemmverbindung 6 direkt am zweiten Element 42 befestigt, und wird darüber direkt an die zweite Oberleitung, z. B. einem Fahrdraht angeklemmt. Bei dieser alternativen Ausführung wird kein Verbindungselement 4 zwischen Verbindungsteil 8 und zweiter Oberleitung 2 benötigt.

Auch bei diesen beiden Ausführungsformen kann die Größe des erfindungsgemäßen Verbindungsteils 8 und demzufolge die Ausdehnung des gekrümmten Bereichs und damit des Lichtraums vorteilhafterweise je nach Bedarf sehr genau an die lokalen Anforderungen angepasst werden. Wie bei den anderen Ausführungen ist auch hier das Verbindungsteil 8 bei Belastung im Wesentlichen formbeständig. Somit kann das gekrümmte Verbindungsteil 8 insbesondere mit Zugkräften belastet werden und gleichzeitig seitlich wirkende Kräfte aufnehmen, ohne dass sich dessen Form plastisch verändert.

Durch die festen Verbindungsvorrichtungen 5 und 6 an den Oberleitungen 1, 2, z.B. am Tragseil und am Fahrdraht wird insbesondere ein seitliches Verdrehen des Verbindungsteils 8 und eine Reduzierung des lichten Raumes unterbunden. Dabei ist die Anzahl der Elemente 40, 42, 44 aus denen das gezeigte Verbindungsteil 8 aufgebaut ist, nicht auf drei beschränkt. Es sind hier auch Lösungen mit nur zwei Elementen, aber auch Lösungen mit mehr als drei Elementen denkbar, sofern der geforderte lichte Raum gewährleistet ist.

Weitere Vorteile, wie insbesondere aufgrund der auch hier im Wesentlichen halbkreisförmigen Ausgestaltung, ergeben sich analog zu den Vorteilen, die bereits bei den anderen Figuren erläutert wurden. Gleichwohl kann das Verbindungsteil 8 je nach Anforderung, auch hier alle möglichen weiteren beliebigen, sinnvollen geometrischen Formen, beispielsweise klothoidale, elliptische, aber auch eckige Formen, annehmen.

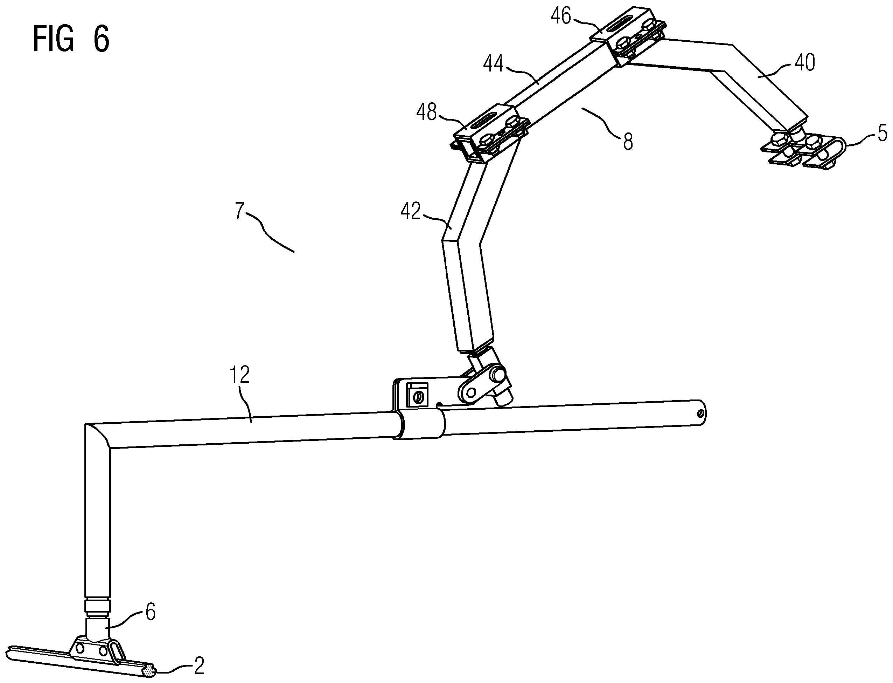

Fig. 6 zeigt eine leicht abgewandelte Ausführung der Erfindung wie sie in Fig. 5 dargestellt ist, die für die Realisierung einer windschiefen Oberleitungsanordnung, bei der eine erste und eine zweite Oberleitung, z.B. ein Tragseil und ein Fahrdraht, nicht parallel, sondern unter einem gewissen Winkel auseinanderlaufen, beispielsweise, wie hier gezeigt, bis zu 90° Grad versetzt verlaufen, geeignet ist.

Dazu ist das Verbindungselement 12 ebenfalls als starres Profil analog zur Fig. 5 ausgeführt, welches aber, wie dargestellt, wenigstens einen Knick aufweist. Der gezeigte Knickwinkel beträgt hier etwa 90°. Je nach Anwendungsfall kann dieser beliebig davon abweichen. Auch die Anzahl der Knicke des Verbindungselements 12 ist nicht auf einen beschränkt, sondern kann je nach Bedarf weitere Knicke aufweisen. Bei der vorliegenden Ausführungsform verläuft das Profil 12 zunächst waagrecht und knickt nach einer gewünschten Distanz um 90° senkrecht nach unten ab. Dabei kann die Verbindungsstelle, mit der das Element 42 des Verbindungsteils 8 mit dem abgewinkelten Profil 12 verbunden ist, wie gezeigt, flexibel oder auch fest (nicht dargestellt) ausgeführt sein. So kann die Verbindungsstelle entlang des gewinkelten Profils verschiebbar ausgeführt sein und/oder eine Drehung bzw. Verkippung des Verbindungsteils 8 gegenüber dem Profil 12 ermöglichen, falls dies entsprechend benötigt wird.

## Patentansprüche

1. Verbindungsanordnung (7) zwischen wenigstens einer ersten (1) und wenigstens einer zweiten (2) Oberleitung einer Oberleitungsanlage, wobei sowohl die erste (1) als auch die zweite (2) Oberleitung entweder ein Tragseil oder ein Fahrdraht ist, bestehend aus wenigstens einem Verbindungsteil (8) und wenigstens zwei Verbindungsvorrichtungen (5, 6), wobei die erste Verbindungsvorrichtung (5) das Verbindungsteil (8) mit der ersten Oberleitung (1) und die zweite Verbindungsvorrichtung (6) das Verbindungsteil (8) mit der zweiten Oberleitung (2) verbindet,
wobei das Verbindungsteil (8) ein erstes (9) und ein zweites Ende (10) und wenigstens einen gekrümmten Bereich aufweist, wobei das erste (9) und das zweite Ende (10) des Verbindungsteils (8) im Wesentlichen senkrecht übereinander angeordnet sind, wobei der wenigstens eine gekrümmte Bereich das erste (9) und das zweite Ende (10) des Verbindungsteils (8) verbindet,
**dadurch gekennzeichnet, dass** eine gedachte, direkte Verbindungslinie vom ersten Ende (9) zum zweiten Ende (10) und der wenigstens eine gekrümmte Bereich des Verbindungsteils (8) einen Raum derart definiert, dass sich ein in diesem Raum befindlicher Gegenstand und das Verbindungsteil (8) nicht berühren.

2. Verbindungsanordnung nach Anspruch 1,
**dadurch gekennzeichnet, dass**
das Verbindungsteil (8) als gebogenes Element (8) ausgeführt ist.

3. Verbindungsanordnung nach Anspruch 1,
**dadurch gekennzeichnet, dass**
das Verbindungsteil (8) mehrteilig ausgeführt ist.

4. Verbindungsanordnung nach einem der vorherigen Ansprüche,
**dadurch gekennzeichnet, dass**
das Verbindungsteil (8) aus wenigstens einem gebogenen Element (8) und wenigstens einem Verbindungselement (3, 4) besteht, wobei entweder das gebogene Element (8) mit dem ersten Ende (9) mittels der ersten Verbindungsvorrichtung (5) mit der ersten Oberleitung (1) und mit dem zweiten Ende (10) mit dem Verbindungselement (4) verbunden ist, wobei das Verbindungselement (4) mittels der zweiten Verbindungsvorrichtung (6) mit der zweiten Oberleitung (2) verbunden ist, oder das gebogene Element (8) mit dem ersten Ende (9) mit dem Verbindungselement (3) verbunden ist, wobei das Verbindungselement (3) mittels der ersten Verbindungsvorrichtung (5) mit der ersten Oberleitung (1) und mit dem zweiten Ende (10) mittels der zweiten Verbindungsvorrichtung (6) mit der zweiten Oberleitung (2) verbunden ist.

5. Verbindungsanordnung nach einem der Ansprüche 1, 2 oder 3,
**dadurch gekennzeichnet, dass**
das Verbindungsteil (8) aus wenigstens einem gebogenen Element (8) und wenigstens einem ersten (3) und einem zweiten (4) Verbindungselement besteht, wobei das gebogene Element (8) mit dem ersten Ende (9) mit dem ersten Verbindungselement (3) und mit dem zweiten Ende (10) mit dem zweiten Verbindungselement (4) verbunden ist, wobei das erste Verbindungselement (3) mittels der ersten Verbindungsvorrichtung (5) mit der ersten Oberleitung (1) und das zweite Verbindungselement (4) mittels der zweiten Verbindungsvorrichtung (6) mit der zweiten Oberleitung (2) verbunden ist.

6. Verbindungsanordnung nach einem der Ansprüche 1 oder 3,
**dadurch gekennzeichnet, dass**
das Verbindungsteil (8) aus wenigstens drei starren, miteinander verbindbaren Elementen (40, 42, 44) besteht, wobei das erste Element (40) die erste Verbindungsvorrichtung (5) und das zweite Element (42) die zweite Verbindungsvorrichtung (6) aufweist, und wobei das erste (40) und zweite (42) Element mittels des dritten Elements (44) miteinander verbunden sind.

7. Verbindungsanordnung nach Anspruch 6,
**dadurch gekennzeichnet, dass**
der Abstand zwischen der Verbindungsstelle des ersten (40) und des dritten (44) Elements und der Verbindungsstelle des zweiten (42) und des dritten (44) Elements einstellbar ist.

8. Verbindungsanordnung nach einem der Ansprüche 6 oder 7,
**dadurch gekennzeichnet, dass**
das zweite Element (42) an dem, der Verbindungsstelle des zweiten (42) und des dritten (44) Elements abgewandten Ende mit einem Verbindungselement (4) verbunden ist, wobei das Verbindungselement (4) mittels der zweiten Verbindungsvorrichtung (6) mit der zweiten Oberleitung (2) verbunden ist.

9. Verbindungsanordnung nach einem der vorherigen Ansprüche,
**dadurch gekennzeichnet, dass**
wenigstens ein Verbindungselement (3, 4) ein Hängerseil ist.

10. Verbindungsanordnung nach einem der Ansprüche 1 bis 8,
**dadurch gekennzeichnet, dass**
wenigstens ein Verbindungselement (3, 4) ein starres Profil ist.

11. Verbindungsanordnung nach einem der vorherigen Ansprüche
**dadurch gekennzeichnet, dass**
das Verbindungsteil (8) im Wesentlichen halbkreisförmig ausgestaltet ist.

12. Verbindungsanordnung nach einem der vorherigen Ansprüche,
**dadurch gekennzeichnet, dass**
das Verbindungsteil (8) bei Belastung im Wesentlichen formbeständig bleibt.

13. Verbindungsanordnung nach einem der Ansprüche 1, 2 oder 3,
**dadurch gekennzeichnet, dass**
das Verbindungsteil (8) wenigstens aus einem Hängerseil (20) und einer Bogenschiene (24, 34) besteht, wobei die Bogenschiene (24, 34) mit dem Hängerseil (20) verbunden ist.

14. Verbindungsanordnung nach Anspruch 13,
**dadurch gekennzeichnet, dass**
die Bogenschiene (24, 34) im Wesentlichen halbkreisförmig ausgestaltet ist.

15. Verbindungsanordnung nach einem der Ansprüche 13 oder 14,
**dadurch gekennzeichnet, dass**
die Bogenschiene (24, 34) bei Belastung im Wesentlichen formbeständig bleibt.

16. Verbindungsanordnung nach einem der Ansprüche 13 bis 15,
**dadurch gekennzeichnet, dass**
die Bogenschiene (24) wenigstens ein Führungselement (26) aufweist, in dem das Hängerseil (20) einklemmbar ist.

17. Verbindungsanordnung nach Anspruch 16,
**dadurch gekennzeichnet, dass**
das wenigstens eine Führungselement (26) der Bogenschiene (24) einen Deckel (30) aufweist, mit dem das Hängerseil (20) in dem wenigstens einen Führungselement (26) der Bogenschiene (24) festklemmbar ist.

18. Verbindungsanordnung nach einem der Ansprüche 13 bis 15,
**dadurch gekennzeichnet, dass**
die Bogenschiene (34) zweiteilig aufgebaut ist, wobei die zwei Teile (36, 38) der Bogenschiene (34) derart geformt sind, dass die zwei Teile (36, 38) der Bogenschiene (34) das Hängerseil (20) über die Länge der Bogenschiene (34) umschließen und einklemmen.

19. Oberleitungsanlage mit wenigstens einer Verbindungsanordnung nach einem der Ansprüche 1 bis 18.

## Claims

1. Connection arrangement (7) between at least a first (1) and at least a second (2) overhead line of an overhead line system, wherein both the first (1) and also the second (2) overhead line is either a catenary wire or a contact wire, consisting of at least one connection part (8) and at least two connection apparatuses (5, 6), wherein the first connection apparatus (5) connects the connection part (8) to the first overhead line (1) and the second connection apparatus (6) connects the connection part (8) to the second overhead line (2),
wherein
the connection part (8) has a first (9) and a second end (10) and at least one curved region, wherein the first (9) and the second end (10) of the connection part (8) are arranged substantially perpendicular one above the other, wherein the at least one curved region connects the first (9) and the second end (10) of the connection part (8),
**characterised in that**
an imaginary, direct connection line from the first end (9) to the second end (10) and the at least one curved region of the connection part (8) defines a space such that an object located in this space and the connection part (8) do not touch one another.

2. Connection arrangement according to claim 1,
**characterised in that**
the connection part (8) is designed as a curved element (8).

3. Connection arrangement according to claim 1,
**characterised in that**
the connection part (8) is designed to be in several parts.

4. Connection arrangement according to one of the preceding claims,
**characterised in that**
the connection part (8) consists of at least one curved element (8) and at least one connection element (3, 4), wherein either the curved element (8) is connected to the first overhead line (1) with the first end (9) by means of the first connection apparatus (5) and to the connection element (4) with the second end (10), wherein the connection element (4) is connected to the second overhead line (2) by means of the second connection apparatus (6), or the curved element (8) is connected to the connection element (3) with the first end (9), wherein the connection element (3) is connected to the first overhead line (1) by means of the first connection apparatus (5) and to the second overhead line (2) with the second end (10) by means of the second connection apparatus (6).

5. Connection arrangement according to one of claims 1, 2 or 3,
**characterised in that**
the connection part (8) consists of at least one curved element (8) and at least a first (3) and a second (4) connection element, wherein the curved element (8) is connected to the first connection element (3) with the first end (9) and to the second connection element (4) with the second end (10), wherein the first connection element (3) is connected to the first overhead line (1) by means of the first connection apparatus (5) and the second connection element (4) is connected to the second overhead line (2) by means of the second connection apparatus (6).

6. Connection arrangement according to one of claims 1 or 3,
**characterised in that**
the connection part (8) consists of at least three rigid elements (40, 42, 44) which can be connected to one another, wherein the first element (40) has the first connection apparatus (5) and the second element (42) has the second connection apparatus (6), and wherein the first (40) and second (42) element are connected to one another by means of the third element (44).

7. Connection arrangement according to claim 6,
**characterised in that**
the distance between the connection point of the first (40) and the third (44) element and the connection point of the second (42) and the third (44) element can be adjusted.

8. Connection arrangement according to one of claims 6 or 7,
**characterised in that**
the second element (42) on the end facing away from the connection point of the second (42) and third (44) element is connected to a connection element (4), wherein the connection element (4) is connected to the second overhead line (2) by means of the second connection apparatus (6).

9. Connection arrangement according to one of the preceding claims,
**characterised in that**
at least one connection element (3, 4) is a dropper wire.

10. Connection arrangement according to one of claims 1 to 8,
**characterised in that**
at least one connection element (3, 4) is a rigid profile.

11. Connection arrangement according to one of the preceding claims,
**characterised in that**
the connection part (8) is designed to be substantially semicircular.

12. Connection arrangement according to one of the preceding claims,
**characterised in that**
the connection part (8) remains substantially dimensionally stable upon loading.

13. Connection arrangement according to one of claims 1, 2 or 3,
**characterised in that**
the connection part (8) consists at least of a dropper wire (20) and a rod (24, 34), wherein the rod (24, 34) is connected to the dropper cable (20).

14. Connection arrangement according to claim 13,
**characterised in that**
the rod (24, 34) is designed to be substantially semicircular.

15. Connection arrangement according to one of claims 13 or 14,
**characterised in that**
the rod (24, 34) remains substantially dimensionally stable upon loading.

16. Connection arrangement according to one of claims 13 to 15,
**characterised in that**
the rod (24) has at least one guide element (26), in which the dropper wire (20) can be clamped.

17. Connection arrangement according to claim 16,
**characterised in that**
the at least one guide element (26) of the rod (24) has a cover (30), with which the dropper wire (20) can be clamped into the at least one guide element (26) of the rod (24).

18. Connection arrangement according to one of claims 13 to 15,
**characterised in that**
the rod (34) is assembled in two parts, wherein the two parts (36, 38) of the rod (34) are shaped such that the two parts (36, 38) of the rod (34) enclose and clamp the dropper wire (20) across the length of the rod (34).

19. Overhead line system with at least one connection arrangement according to one of claims 1 to 18.

## Revendications

1. Agencement (7) de connexion entre au moins une première (1) et au moins une deuxième (2) lignes aériennes de contact d'une caténaire, dans lequel, à la fois la première (1) et également la deuxième (2) lignes de contact est soit un câble porteur soit un fil de contact constitué d'au moins une pièce (8) de connexion et d'au moins deux dispositifs (5, 6) de connexion, dans lequel le premier dispositif (5) de connexion relie la partie (8) de connexion à la première ligne (1) aérienne de contact et le deuxième dispositif (6) de connexion relie la pièce (8) de liaison de connexion à la deuxième ligne (2) aérienne de contact,
dans lequel
la pièce (8) de connexion a un premier (9) et un deuxième bouts (10) et au moins une partie incurvée, dans lequel le premier (9) et le deuxième bouts (10) de la pièce (8) de connexion sont disposés sensiblement verticalement l'un au-dessus de l'autre, dans lequel la au moins une partie incurvée relie le premier (9) et le deuxième bouts (10) de la pièce (8) de connexion,
**caractérisé en ce qu'**
une ligne de connexion directe imaginaire allant du premier bout (9) au deuxième bout (10) et la au moins une partie incurvée de la pièce (8) de connexion définissent un espace, de manière à ce qu'un objet se trouvant dans cet espace et la pièce (8) de connexion ne se touchent pas.

2. Agencement de connexion suivant la revendication 1,
**caractérisé en ce que**
la pièce (8) de connexion est réalisée sous la forme d'un élément (8) incurvé.

3. Agencement de connexion suivant la revendication 1,
**caractérisé en ce que**
la pièce (8) de liaison est réalisée en plusieurs pièces.

4. Agencement de connexion suivant l'une des revendications précédentes,
**caractérisé en ce que**
la pièce (8) de connexion consiste en au moins un élément (8) incurvé et en au moins un élément (3, 4) de connexion, dans lequel soit l'élément (8) est, par le premier bout (9), connecté à la première ligne (1) aérienne de contact au moyen du premier dispositif (5) de connexion et, par le deuxième bout (10), à l'élément (4) de connexion, dans lequel l'élément (4) de connexion est connecté à la deuxième ligne (2) aérienne de contact au moyen du deuxième dispositif (6) de connexion, soit l'élément (8) incurvé est, par le premier bout (9), connecté à l'élément (3) de connexion, dans lequel l'élément (3) de connexion est connecté à la première ligne (1) aérienne de contact, au moyen du premier dispositif (5) de connexion et, par le deuxième bout (10), à la deuxième ligne (2) aérienne de contact, au moyen du deuxième dispositif (6) de connexion.

5. Agencement de connexion suivant l'une des revendications 1, 2 ou 3,
**caractérisé en ce que**
la pièce (8) de connexion est constituée d'au moins un élément (8) incurvé et d'au moins un premier (3) et d'un deuxième (4) éléments de connexion, dans lequel l'élément (8) incurvé est, par le premier bout (9) connecté au premier élément (3) de connexion et, par le deuxième bout (10), au deuxième élément (4) de connexion, dans lequel le premier élément (3) de connexion est connecté à la première ligne (1) aérienne de contact, au moyen du premier dispositif (5) de connexion et le deuxième élément (4) de connexion, à la deuxième ligne (2) aérienne de contact, au moyen du deuxième dispositif (6) de connexion.

6. Agencement de connexion suivant l'une des revendications 1 ou 3,
**caractérisé en ce que**
la pièce (8) de connexion est constituée d'au moins trois éléments (40, 42, 44) rigides pouvant être connectés les uns aux autres, dans lequel le premier élément (40) comporte le premier dispositif (5) de connexion et le deuxième élément (42), le deuxième dispositif (6) de connexion, et dans lequel le premier (40) et le deuxième (42) éléments sont connectés entre eux au moyen du troisième élément (44).

7. Agencement de connexion suivant la revendication 6,
**caractérisé en ce que**
la distance entre le point de connexion du premier (40) et du troisième (44) éléments et le point de connexion du deuxième (42) et du troisième (44) éléments est réglable.

8. Agencement de connexion suivant l'une des revendications 6 ou 7,
**caractérisé en ce que**
le deuxième élément (42) est, au bout non tourné vers le point de connexion du deuxième (42) et du troisième (44) éléments, connecté à un élément (4) de connexion, dans lequel l'élément (4) de connexion est connecté à la deuxième ligne (2) aérienne de contact au moyen du deuxième dispositif (6) de connexion.

9. Agencement de connexion suivant l'une des revendications précédentes,
**caractérisé en ce qu'**
au moins un élément (3, 4) de connexion est un câble pendant.

10. Agencement de connexion suivant l'une des revendications 1 à 8,
**caractérisé en ce qu'**
au moins un élément (3, 4) de connexion est un profilé rigide.

11. Agencement de connexion suivant l'une des revendications précédentes,
**caractérisé en ce que**
la pièce (8) de connexion est de forme sensiblement hémicirculaire.

12. Agencement de connexion suivant l'une des revendications précédentes,
**caractérisé en ce que**
la pièce (8) de connexion conserve sensiblement sa forme lorsqu'elle est soumise à une charge.

13. Agencement de connexion suivant l'une des revendications 1, 2 ou 3,
**caractérisé en ce que**
la pièce (8) de connexion est constituée d'au moins un câble (20) pendant et d'un rail (24, 34) cintré, dans lequel le rail (24, 34) cintré est connecté au câble (20) pendant.

14. Agencement de connexion suivant la revendication 13,
**caractérisé en ce que**
le rail (24, 34) cintré est de forme sensiblement hémicirculaire.

15. Agencement de connexion suivant l'une des revendications 13 ou 14,
**caractérisé en ce que**
le rail (24, 34) cintré conserve sensiblement sa forme lorsqu'il est soumis à une charge.

16. Agencement de connexion suivant l'une des revendications 13 à 15,
**caractérisé en ce que**
le rail (24) cintré a au moins un élément (26) de guidage, dans lequel le câble (20) pendant peut être serré.

17. Agencement de connexion suivant la revendication 16,
**caractérisé en ce que**
le au moins un élément (26) de guidage du rail (24) cintré a un couvercle (30), par lequel le câble (20) pendant peut être serré fixement dans le au moins un élément (26) de guidage du rail (24) cintré.

18. Agencement de connexion suivant l'une des revendications 13 à 15,
**caractérisé en ce que**
le rail (34) cintré est constitué en deux parties, dans lequel les deux parties (36, 38) du rail (34) cintré sont conformées de manière à ce que les deux parties (36, 38) du rail (34) cintré entourent et serrent le câble (20) pendant sur la longueur du rail (34) cintré.

19. Caténaire comprenant au moins un agencement de connexion suivant l'une des revendications 1 à 18.
